Europäisches Patentamt

(19) European Patent Office

Office européen des brevets

(11) Publication number: **0 201 317**
**A2**

# (12) EUROPEAN PATENT APPLICATION

(21) Application number: **86303439.3**

(51) Int. Cl.⁴: **B 65 G 17/08**

(22) Date of filing: **06.05.86**

(30) Priority: **06.05.85 NZ 211988**

(43) Date of publication of application: **12.11.86**
**Bulletin 86/46**

(84) Designated Contracting States: **AT BE CH DE FR GB IT LI LU NL SE**

(71) Applicant: **NAPIER TOOL & DIE COMPANY LIMITED, Onekawa Road, Napier (NZ)**

(72) Inventor: **Witham, Robert Walter, 74 Charles Street, Westshore, Napier (NZ)**
Inventor: **Stevenson, Edward John, 99 Vigor Brown Street, Napier (NZ)**

(74) Representative: **Leale, Robin George et al, FRANK B. DEHN & CO. Imperial House 15-19 Kingsway, London WC2B 6UZ (GB)**

(54) Conveyor elements.

(57) A conveyor assembly comprising moulded plastics conveyor modules are inter-engageably by means of a complementary hook and latch system and without the use of a connecting pin. The modules are disengageable only at predetermined positions, being positions selected so far as to be unlikely to arise during normal use. Conveyor belts of this invention are driven by means of a sprocket provided with a multifit bore hole. Depending on selection of shaft dimension the sprocket either drives the belt, or idles a guide-wheel. The elements of the assembly are designed to be moulded from appropriate plastic materials.

"Conveyor elements"    0201317

This invention relates to conveyor elements, and a method of driving a conveyor comprised of such elements.

The invention has particular but not necessarily exclusive application to conveyor elements for making up an endless conveyor in which the elements are pivotally joined end to end. The elements may comprise substantially rectangular modules joined long edge to long edge.

In known moulded plastics forms of the latter modules, a series of mutually parallel flat identical lugs is provided at each long edge. The lugs are uniformally spaced one from the other so that, when one module is offered up edge to edge to a second, identical module, the lugs on one edge of the one module can be accomodated in the spaces between the lugs on the edge of the second module. When the two modules are thus positioned, holes in the lugs are brought into alignment and a pin is then inserted in the holes, pivotally joining the elements together.

It is an object of the invention to provide conveyor elements in which no separate pin or equivalent element is used.

It is a futher object to provide conveyor elements which may be readily connected one to another to form a conveyor belt or the like which substantially withstands separation or deformation of the belt in use and elements which are rugged and dependable and which can be disconnected readily when desired.

It is a further object to provide conveyor elements which can be formed of plastic material by moulding processes known in the art.

It is a further object of this invention to drive a belt composed of such elements by means of a sprocket capable of idling so as to support and guide said belt, and which may also be driven by means of appropriate selection of the bearing shaft for each sprocket.

According to the invention, an element for making up an endless conveyor includes at one termination a hook formation and at a second termination a complemental formation such that the hook formation on the element can engage the complemental formation on an adjacent identical element to pivotably join the two elements together, and means for preventing involuntary disengagement of one element from the adjacent element.

According to a further embodiment of this invention there is provided a sprocket and drive shaft assembly for an endless conveyor belt including;

a)   A plurality or sprockets with teeth adapted to engage said belt, having an axial bore hole adapted to receive at any one time a shaft, and

b) Said shafts selected from the group of shafts composed of;

    (i)      Shafts in which each shaft is of constant cross-section throughout its length, but is different in cross-section from its fellows, and

    (ii)      Shafts of varying cross-section throughout their length,

all of said shafts adapted to engage said sprocket bore holes.

According to one aspect of the invention the hook formation has an opening directed at least partly towards the second termination.

According to the second aspect of the invention, the means for preventing involuntary disengagement comprises a protuberance formed in the element, which protuberance the hook formation on the adjacent element is arranged to engage to prevent disengagement except when the elements are pivoted relative one to the other to a predetermined disposition. The predetermined disposition is not a disposition occurring in ordinary use so that the elements cannot become disengaged in ordinary use.

In one form the protuberance is moulded integrally with the element.  Also in one form the opening in the hook formation is smaller than the protuberance, the hook formation being resiliently deformable so as to clip over the protuberance when the one element is being joined to the adjacent element.

Certain embodiments of the invention are now described by way of example with reference to the accompanying drawings in which:

Figure 1 is a plan view of a moulded plastics conveyor element, according to a first embodiment.

Figure 2 is an end view of two elements joined one to the other in a first disposition according to a first embodiment.

Figure 3 is a similar view of the elements of Figure 2 in a second disposition.

Figure 4 is an end view of an element according to a second embodiment.

Figure 5 is a plan view of an element according to a second embodiment.

0201317

Figure 6 is a plan view of the obverse of the element of Figure 5 and

Figure 7 is a sprocket according to a further embodiment of the invention.

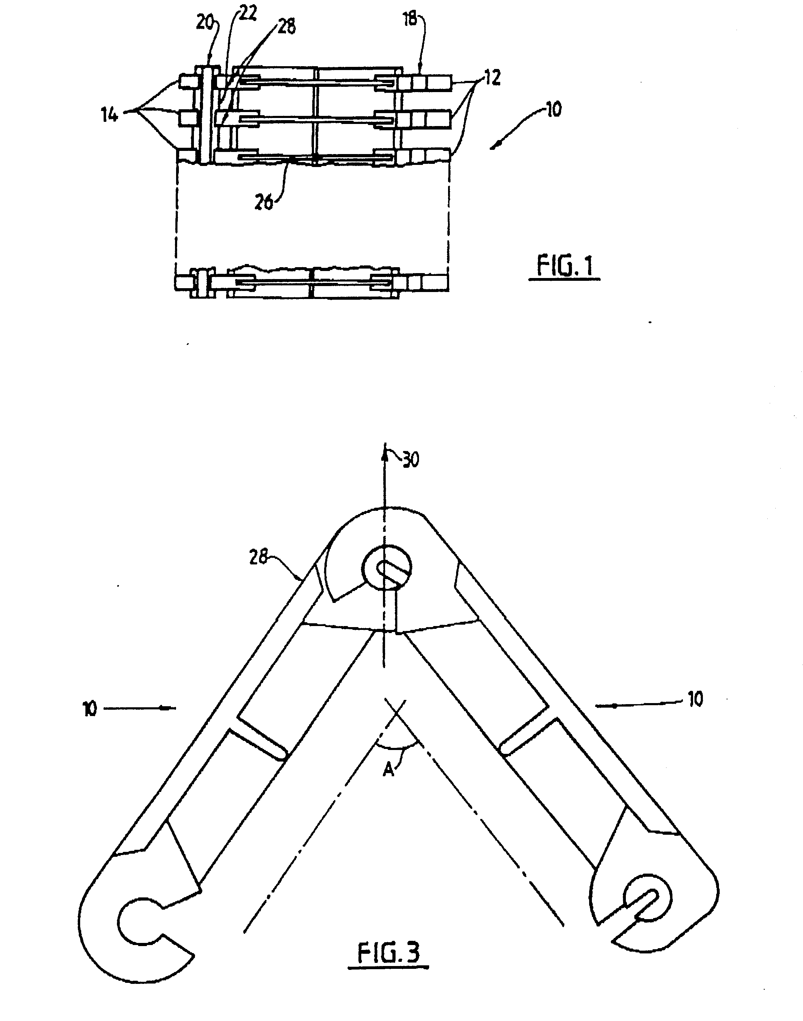

In Figures 1, 2 and 3 there are shown two substantially identical modular elements 10 of moulded plastics material suitable for use with a consumable product and complying with food handling regulations. The elements 10 are thus particularly suited to making up a conveyor for use in the food industry.

Each element 10 is substantially rectangular, having on each of its respective long edges first and second series of rounded lugs 12 and 14. The lugs 12 in the first series are mutually identical, each embodying a hook formation 16 of keyhole shape. The opening 18 of each hook formation is directed towards the lugs 14, being disposed at an angle of about 60$^{o}$ to the general plane of the element 10.

The lugs 14 in the second series have no substantial hook formation, the recess 20 in each lug being provided solely for reasons unconnected with the invention.

The lugs 12 and 14 in each series are of uniform equal thickness. Adjacent lugs 12 and 14 in each series are uniformly spaced apart a distance substantially equal to the thickness of each lug. Between each pair of adjacent lugs 14 a round boss 22 is formed of diameter substantially equal to the inner, rounded part 24, of the hook formation. Thus the lugs 12 of the element 10 can engage the bosses 22 of anadjacent element, allowing pivotal movement there between.

According to a first emodiment, each lug 12 is joined to a lug 14 on the same element 10, by a rib 26. The ribs 26 are joined by bridging formations 28 which together constitute what is defined herein as a "floor" of the element 10. The ends of the bridging formations 28 on one element 10 form a brace between the briding formations and project close up to the outer periphery of the lug 14 on the adjacent element when the two elements are engaged.

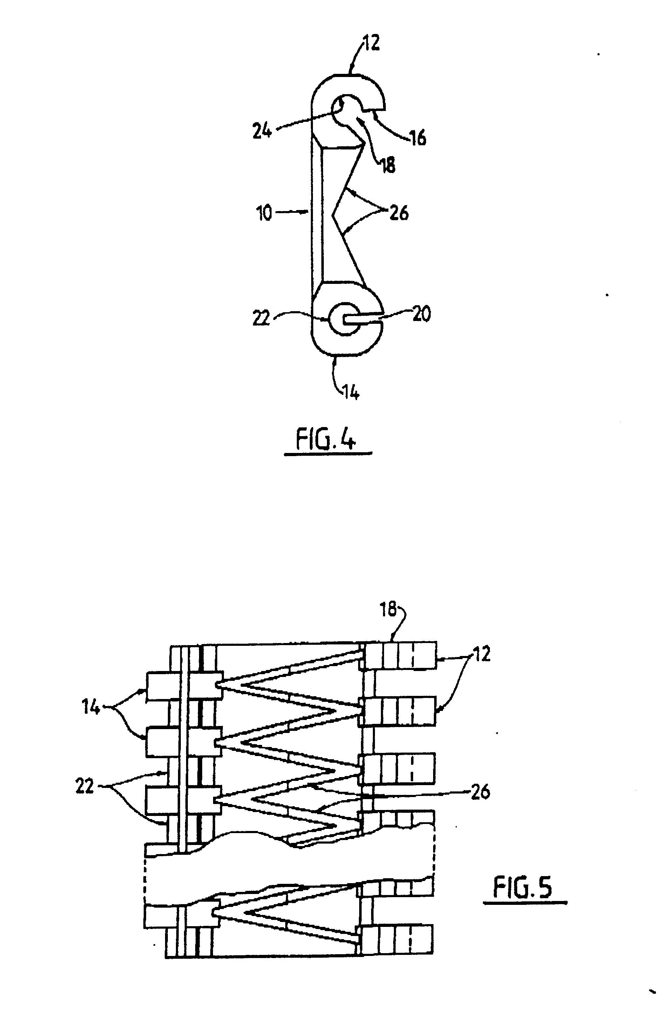

A second embodiment will now be described with reference to Figures 4,5, and 6, in which features are numbered according to their equivalent features as shown in Figures 1,2, and 3.

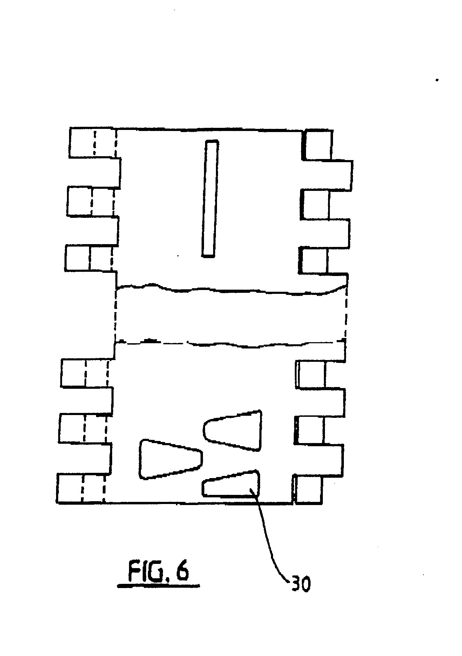

As shown in Figure 5, the elements 12 and 14 are off set, and are connected by diagonal ribs 26. As can be seen from Figure 4, these ribs are also tapered.

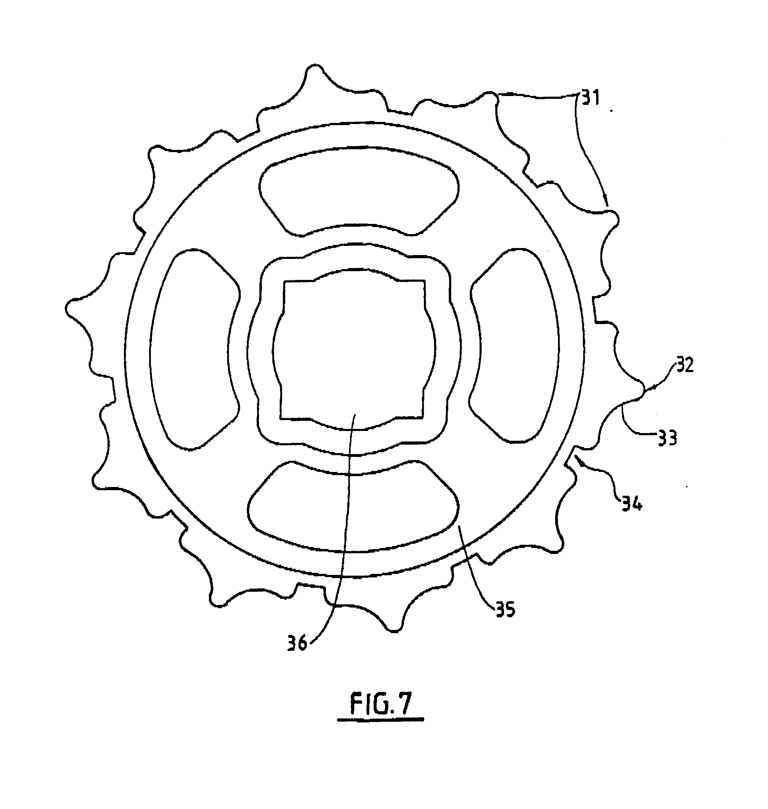

As shown in Figure 6, the apertures 30 now formed in the floor of the element are no longer rectangular, but are trapezoidal It will be appreciated that with both embodiments, apertures as defined above may exist, or the floor may be covered to a complete or lesser extent with material forming what is described herein as a "decking". This decking may be perforated, or bear upraised portions selected to suit the material to be conveyed by the invention. Figure 7 showsa sprocket according to this invention, having a plurality of teeth 31, comprising an apex 32, a curving face 33, and an inter-dental space 34. The teeth are mounted on the rim 35 of a circular portion, shown having spokes in the drawing, and having an axial bore hole 36. The inner perimeter of the bore hole is defined by or constructed from the intersection of a circle and a square, of which the circle's centre and the square's diagonals intersection point are coincident. Further, the diameter of the circle is selected so as to be not less than, (and preferably slightly more than) the length of one side of the square, and not more than, (and preferably slightly less than) the diagonal of the square. Such a shape is defined herein as a "squared circle".

In use, it permits the sprocket to rotate on a shaft with a diameter close to that of the circle, such as for example when the sprocket is being utilised to support and guide the conveyor belt, but is not actively driving it, and also to be driven by a shaft having a substantially square cross-section.

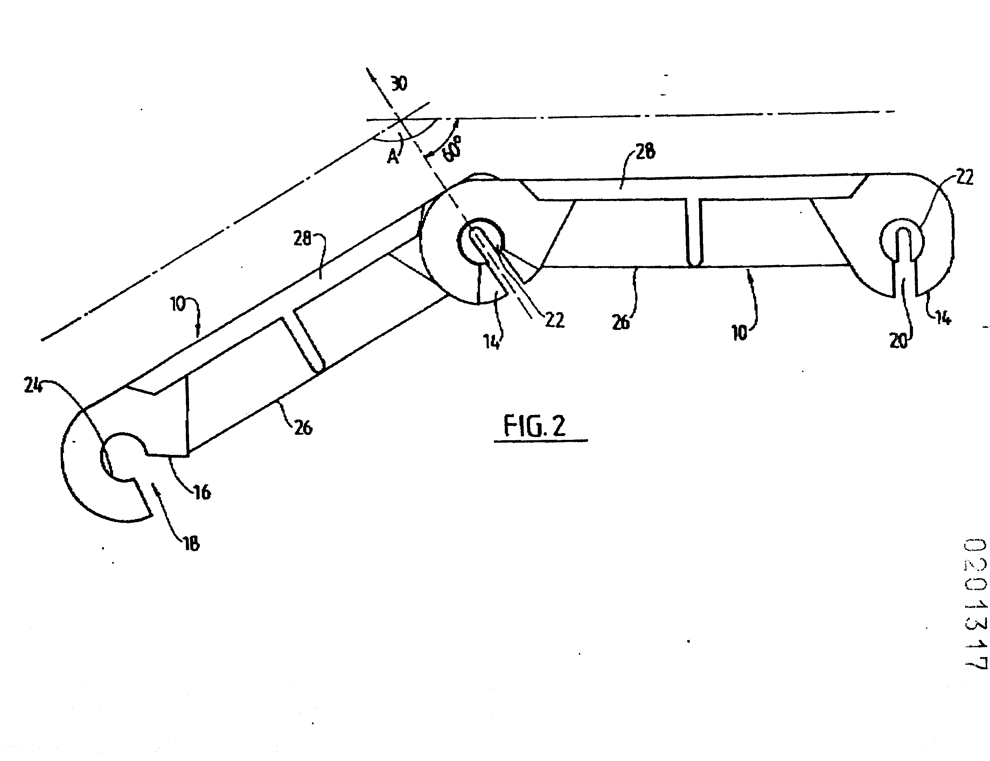

The reason for the above described geometry of the various parts will now become apparent. In ordinary use the angle A between two adjacent elements 10, as they pass around end sprockets such as shown in Figure 7, depends upon the diameter of the sprockets and the number of teeth thereon. In a typical case, as shown in Figure 2 this angle might be 144° for a 10-tooth sprocket, but it would never be less than, say 90° in ordinary use. In order to engage or disengage one element 10 from another, the angle A must be reduced to 90° or less by manually pivoting one element with respect to the other. In this disposition as shown in Figure 3, force can be applied to the one element in the direction of arrow 30 to cause the hook formations 16 to disengage the bosses 22, the outer periphery of the lugs 12 clearing the ends of the bridging formations 28.

If the above mentioned angle is more than 90°, the lugs cannot become disengaged. The boss 22 can move out of the hook formation only along the axis of the latter. Should this tend to happen the outer periphery of the lug 12 comes into abutment with the end of the bridging formation.

Drive shafts and sprockets of this invention will now be described with reference to the drawings. It will be noted from Figure 2 that at the junction of two elements according to this invention, a spine or rib is formed by the inter-engagement of the complementary ends. It is against this rib that the teeth 31 of the sprocket drive. By appropriate selection of the teeth as a function of the
sprocket diameter, the belt can be smoothly and uniformly
driven with no slipping.

The elements 10 can take a very wide variety of forms.  The
bridging elements need not constitute the protuberances which
limit disengagement; indeed the bridging elements may be
omitted altogether.

0201317

Claims:

1.    A conveyor system, including an element for making up an endless conveyor having at one end at least one hook formation and at an opposite end a complemental formation such that the hook formation on the element can engage the complemental formation on an adjacent identical element to pivotably join the two elements together, and means for preventing involuntary disengagement of the said element from the said adjacent element.

2.    The conveyor system as claimed in claim 1 in which the element has first and second edges spaced one from the other, along the first edge a row of hook formations and along the second edge a row of complemental formations such that the hook formations of the first edge can engage the complemental formations at the second edge of an identical element adjacent to the said element to pivotably join the two elements together, and means for preventing involuntary disengagement of the two elements comprising a protruberance formed in each said complemental formation, which protruberance a hook formation of the adjacent element is adapted to engage so as to be non-releaseable therefrom except when the elements are pivoted to a pre-determined disposition relative one to the other.

3.    A conveyor system as claimed in claim 2 in which the complemental formations are offset across the width of the element.

4.     A conveyor system as claimed in claim 2 in which the complemental formations are onset across the width of the element.

5.     A conveyor systems as claimed in claim 2 in which the hooks of the row of hook formations have openings directed at least partly towards the row of complemental formations.

6.     A conveyor system as claimed in claim 2 in which the protuberance for preventing involuntary disengagement comprises a longitudinal brace closely adjacent to the row of hook formations and the row of complemental formations.

7.     A conveyor element as claimed in claim 2 in which the second complemental formation is provided with a boss capable of engaging in snap-lock engagement with the hooks of the first formation.

8.     A conveyor element as claimed in any of the preceeding claims comprising substantially rectangular modules capable of being joined long edge to long edge.

9.     A conveyor elements as claimed in claim 2 in which the off-set elements are connected by diagonal bridging.

10.    A conveyor element as in claim 9 in which said bridging is tapered.

11.    A conveyor element as claimed in any of the claims herein formed of molded plastic.

- 12 -

0201317

12.    A sprocket and drive shaft assembly for an endless conveyor belt comprising:

   a.    a plurality of sprockets bearing teeth adapted to engage said belt, each sprocket having an axial bore hole adapted to receive at any one time one shaft:

   b.    said shaft selected from the group of shafts composed of:

      1.    shafts in which each shaft is of constant cross-section throughout its length, but is different in cross-section from its fellows, and

      2.    shafts of varying cross-sections throughout their length,

      all of said shafts adapted to engage said sprocket bore holes.

13.    A sprocket and drive shaft assembly as claimed in claim 12 in which the bore hole is adapted to receive at least two different shafts, selected from group bl as defined in claim 12, of which the one is capable of driveable engagement with the sprocket, and the second is selected to permit relative rotation of said sprocket about said shaft.

14.    A sprocket and drive shaft assembly as claimed in claim 13, in which the bore hole is formed in the shape of a squared circle as defined herein, and the one shaft having a square cross-section, and adapted to fit in driven engagement, the second having a round cross-section and adapted to permit relative rotation of said sprocket about said shaft.

15. A sprocket and drive shaft assembly in which the drive shaft is selected from the group b2 as defined above, having at different places along its length at least two different cross-sections, the one adapted to driveably engage the sprocket, the other adapted to permit relative rotation of said sprocket about said shaft, means for shifting said sprocket relative to said shaft such that a sprocket may be shifted from a position 1 in which said sprocket is engaged by a first shaft portion having a first cross-section to a position 2 in which said sprocket is engaged by a second shaft portion having a second cross-section.

16. A sprocket and drive shaft assembly as claimed in claim 15 in which position 1 of said shaft is selected so as to driveably engage said sprocket, and position 2 is selected so as to permit relative rotation of said sprocket about said shaft.

17. A sprocket as claimed in any claim herein formed of. molded plastic material.

18. A conveyor assembly comprising a conveyor element as claimed in any preceeding claim, engaged with a sprocket and drive shaft assembly as claimed in any preceeding claim.

FIG.1

FIG.3

FIG.2

0201317

FIG.4

FIG.5

0201317

FIG. 6

30

0201317

FIG.7